# FASCICULE DE BREVET EUROPEEN

(11) **EP 0 565 712 B1**
(45) Date de publication et mention de la délivrance du brevet: **09.07.1997**
(21) Numéro de dépôt: 93906320.2
(22) Date de dépôt: 12.03.1992
(51) Int. Cl.: G06F 15/16, G06F 9/38

(54) **STRUCTURE DE RESEAU POUR LE TRAITEMENT PARALLELE DES LOGICIELS**
NETZWERKSTRUKTUR FUER PARALLELES VERARBEITEN VON SOFTWARE
NETWORK STRUCTURE FOR PARALLEL SOFTWARE PROCESSING

(30) Priorité: 10.10.1991 RO 148526
(43) Date de publication de la demande: 20.10.1993
(73) Titulaire: MINCA, Ion, R-72441 Bucaresti (RO)
(72) Inventeur: MINCA, Ion, R-72441 Bucaresti (RO)
(74) Mandataire: Chauchard, Robert
(86) Numéro de dépôt international: RO9200005
(87) Numéro de publication internationale: WO9307571

(56) Documents cités:
- EP-A- 0 402 891
- EP-A- 0 427 023
- EP-A- 0 428 938
- EP-A- 0 429 305
- WO-A-86/03038
- DE-A- 3 801 361
- US-A- 4 720 784

## Description

### Domaine technique

L'invention concerne une structure de réseau pour le traitement parallèle des logiciels destiné à obtenir des systèmes de traitement massif parallèle de haute performance.

### Technique antérieure

Pour obtenir des hautes performances dans le traitement de l'information est connue la méthode du traitement parallèle qui consiste en décomposition des processus dans les éléments composants et la distributions de ceux-ci sur des équipements de traitement qui roulent simultanément. On connaît dans ce cadre plusieurs structures de traitement parallèle: des structures pipeline et des structures multiprocesseur (Bell, C,G., Newell, A. - Computer Structures: Reading and Exemples, McGraw - Hill Book Comp., New York, 1971; Treleaven, P., Vanneski, M. (eds.) - Future Parallel Computers, Springer Verlag, Berlin, 1987).

Les structures pipeline situent l'abord du traitement parallèle aux niveaux des composants des instructions: l'analyse des instructions a lieu dans les opérations dont elles sont composées et l'exécution de chaque d'entre celles-ci sur des unités dédiées, connectées en série; le résultat des opérations éffectuées par l'unité précédente est assumé par l'unité courrente qui, après l'exécution des opérations dont elle est specialisée, elle transmet le résultat à l'unité suivante (Chen, T,C. - Parallelism, pipelining and computer efficiency, Computer Design, January, 1971). Une telle structure a été utilisée pour l'augmentation des performances dans des systèmes bien connus (Flores, I.-Lookahead in the IBM System 370/165, Computer no. 11, vol.7, November 1974; Thornton, I.E.-Parallel operation in the Control Data 6600, AFIPS. Proc. FJCC, part.2, vol. 26, 1964, pp.34-40). Les structures organisées pipeline ont les désavantages suivants: le grand poids des instructions de branchement (à peu près 25%) provoque des interruptions fréquents de rythme, la ligne devant être vidée des instructions qui ont été extraites par anticipation de la mémoire; les interrelations des instructions provoquent des blocages fréquants du traitement. Si les unités qui composent la ligne ont des temps du traitement inégaux, pour uniformiser le débit de la ligne on utilisera plusieurs unités montées en parallèle dans des certains noyaux de la ligne, la solution ayant besoin d'un contrôle très difficile et, de plus, à cause des interrelations des instructions, on ne pourra pas réaliser une utilisation efficace du matériel installé à fonctionner en parallèle. La non-uniformité des instructions qui, du point de vue de la complexité et du développement en temps couvre une plage de quelques cycles jusqu'aux dizaines de cycles, détermine une utilisation inefficace du matériel et un contrôle compliqué. Cette méthode est adéquate en général pour les types d'applications qui présentent un haut degré d'uniformité du traitement (traitement des vecteurs, de matrices, de traitement des images etc.) et est utilisée spécialement dans les super-ordinateurs (Weiss, S., Smith,J.E.-Instruction Issue Logic in Pipe-linead Supercomputers, IEEE Trans. on Comp, C-33, no.11, Nov. 1984).

Les structures multiprocesseurs qui utilisent plusieurs processeurs connectés par l'une des méthodes connues (Zakharov, V.-Parallelism and Array Proccesing, IEEE Trans. on Comp., January 1984; Geogescu, I.-Communication in parallel processing systems, Studies and Researches in computer and informatics, vol.1, No.1, March 1990): mémoire partagée (bus commun, matrices de connexions) ou réseau (arbre, anneau, massif, hypercube, etc.) ont en commun le fait que plusieurs processeurs physiquement distincts en traitant chacuns qu'un programme independent sont connectés dans une configuration géometrique. Au cas de la connexion par un bus commun des plusieurs processeurs à une mémoire la configuration est limitée par le débit de ce bus, qui devient le point critique de cette structure. Les configurations qui utilisent une matrice de connexion, structurées par la dispositions des éléments sur les deux côtés de la matrice ainsi qu'elle assure une voie d'accès à chaque module de mémoire à chaque processeur, présentent les désavantage d'un système d'intérconnexions complexes dont la complexité augmente avec le nombre des dispositifs connectés. Au cas de la connexion dans des réseaux aux configurations différentes (arbre, anneau, tore, hypercube, etc.) les problèmes de la communication, distribution et coordination de traitement deviennent cruciaux en même temps avec l'augmentation des dimensions du réseau. L'une des structures les plus connues de ce domaine est réalisée par la connexion des 64 K noyaux d'un réseau de topologie de hypercube, dans chaque noyau étant une cellule dotée avec une petit mémoire (4 Ko) et un processeur de petite granulation, qui roule avec un set réduit d'instructions sur des opérandes de quelques bits. À chaque seize noyaux est liée une unité, pour pouvoir réaliser la communication dans le réseau. (Hillis, D.H. - The Connection Machine, MIT Press, Cambrige, 1985). Les principaux désavantages de cette structure sont: la granulation fine ne la fait seulement applicable qu'aux traitements avec la particularité spécifique (vecteurs de dimensions très grandes et d'autres structures de données pareilles), les performances, fortement dépendantes du domaine d'application, tombent brutalement pour des problèmes qui ne peuvent être distribués dans une manière correspondante sur une telle structure; deuxièment, une granulation fine a comme effet la génération d'un besoin de transfert de données dans un réseau plus grand. Donc, en conclusion, la programmation, l'utilisation et la communication sont des problèmes insurmontables pour un tel type de réseau. A l'autre extremité il y a les réseaux de processeurs conventionnels de grande granulation. Ces structures sont plus adaptées au traitement des données qui n'ont pas nécessairement une structure régulière, mais, parce que les réseaux actuels ne solutionnent pas le problème de la communication, rarement un tel réseau pratique dépasse des dizaines, maximum des centaines des processeurs. (Hockney, R.T., Jesshope, C.R. - Parallel Computers, Adam Hilger Ltd., Bristol,1981).

### L'exposé de l'invention

Le problème technique que l'invention solutionne consiste dans la réalisation d'une structure de réseau pour le traitement parallèle des logiciels, dans le cadre duquel sont résolus les aspects sur la communications en réseau et on facilite en même temps une distribution et une coordination plus facile des tâches de traitement.

La structure de réseau pour le traitement parallèle des logiciels, conformément à l'invention, consiste dans des unités de mémoire de grandes dimensions disposées dans les noyaux du réseau capable de permettre l'accès simultanément des plusieurs unités de traitement assemblées sur les arêtes du réseau qui a l'incidence dans ce noyau, des unités de traitement qui assurent un nombre élevé des processeurs virtuels de grande granulation qui peuvent effectuer tant des opérations de traitement sur les deux mémoires entre les quelles l'unité de traitement est connectée, qu' aussi des opérations de transfert entre les deux mémoires.

L'unité de traitement consiste dans une pile d'adresse-programme et le contrôle nécessaire pour calculer l'adresse de l'instruction courente, l'exécution des branchements, des changements d'état programme, d'une unité de lecture des instructions de la mémoire qui prend les demandes de la pile d'adresse-programme et extrait les instructions de la mémoire ou de l'antemémoire dont elle est dotée et qui dépose dans des tampons d'instructions, d'un bloc d'interprétation ordre qui prend les instructions des tampons d'instructions, les interprète, calcule les adresses des opérands et les dépose sur des tampons d'accès aux registres ou aux tampons d'accès à la mémoire, qui, après la lecture des opérands, les dépose dans des tampons d'opérands à l'entrée d'un bloc d'exécution, bloc qui prend les opérands des tampons d'opérands de l'entrée, exécute l'opération solicitée et dépose le résultat dans des tampons d'écriture qui inscrivent le résultat dans le bloc des registres généraux en exécutant en parallèle l'actualisation des indicateurs d'un bloc d'évidence, d'un bloc de transfert qui exécute le transfert d'information entre les deux unités de mémoire à laquelle est connectée l'unité de traitement et d'une unité de contrôle qui prend des bus de connexion avec les mémoires les ordres de contrôle nécessaires au lancement, l'arrêt et le test des processus qui se déroulent dans l'unité, processus pour lesquels on a assuré chacun un processeur virtuel réalisé par la virtualisation des ressources physiques installées qu' elles utilisent en commun.
En appliquant l'invention on obtient les avantages suivants:
- le traitement parallèle des problèmes au niveau de procedure, granulation grande du traitement, avec une légère division et un contrôle facile des tâches de traitement en parallèle;
- des grands groupes de processeurs à communication par la mémoire dans le cadre du groupe et communication réduite entre les groups, par le réseau;
- réseau avec communication éfficiente, le débit et les voies de transfert étant adaptables après les nécessités pour l'instant de trafic, redondant et fiable;
- unité de traitement avec la possibilité de dimensioner d'une manière optimale les ressources installées, en tenant compte des paramètres du set des instructions, la technologie utilisée,
- les algorithmes utilisés avec des caractéristiques modulaires qui permettent d'obtenir les composants fiables, tolerants aux défauts;
- unité de traitement avec une structure régulière, modulaire qui permet une projection facile des circuits integrés correspondants;
- performances des systèmes de traitements parallèles obtenus sont indépendentes des structures des données à traiter (soit régulière ou non).

### Description sommaire des dessins

Les figures de 1...3 représentent:
- fig. 1^{e}. schéma d'un réseau de traitement type hypercube, en utilisant l'unité de traitement;
- fig. 2^{e}- schéma équivalent des connexions entre deux noyaux du réseau de traitement, en
- explicitant les processeurs virtuels, les groups des processeurs qui se forment dans les noyaux et les voies de communications entre les noyaux;
- fig. 3^{e}- schéma bloc de l'unité de traitement.

### La meilleure manière de réaliser l'invention

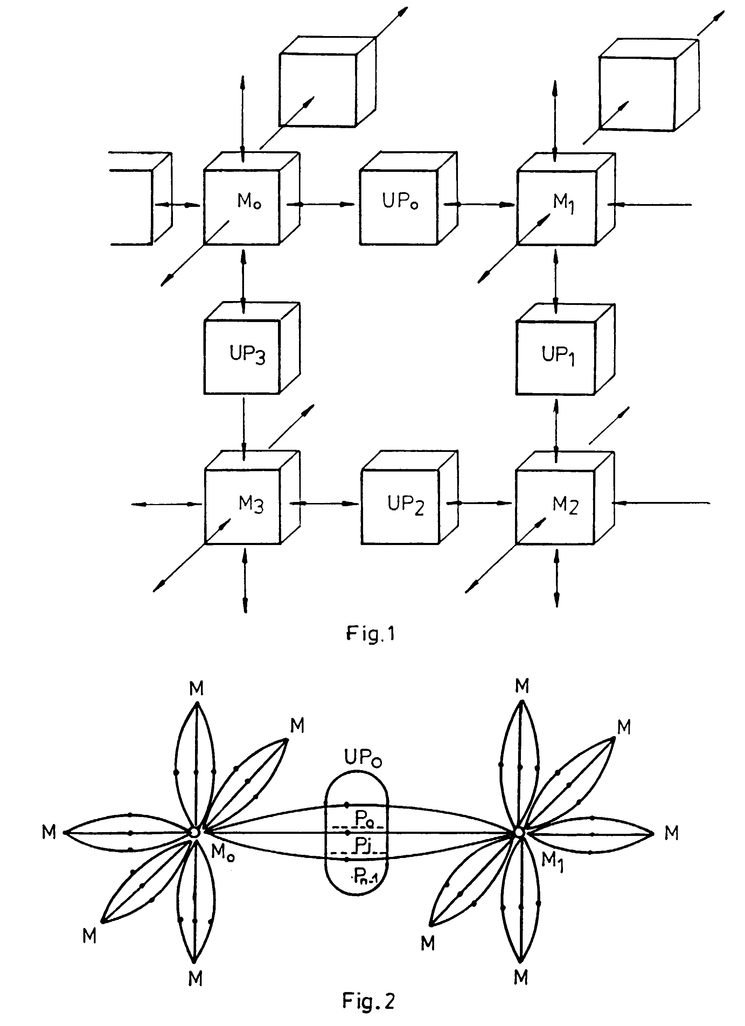

On donne par la suite l'éxemple de la meilleure réalisation de l'invention. La structure de réseau de traitement conformément à l'invention (fig. 1^{e}) est réalisée en disposant dans les noeuds du réseau des unités des mémoires de grandes dimensions Mₒ, M₁, M₂, M₃,... capables de permettre l'accès simultanément des plusieurs unités de traitement UPₒ, UP₁, UP₂, UP₃,... montées sur les arêtes du réseau qui ont l'incidence dans ce noeud, une unité de traitement enassurant un nombre élevé de processeurs virtuels qui peuvent executer tant des opérations de traitement sur les deux mémoires entre lesquelles est connectée l'unité de traitement que des opérations de transfert entre les deux mémoires entre lesquelles est connectée l'unité de traitement. Les unités de mémoire sont prévues avec un bloc de contrôle interprocessus qui participe à la réalisation du processus communication dans le réseau. Dans la figure 2^{e} on présente le schéma équivalant de la connexion entre deux noeuds du réseau de traitement, dans laquelle sont disposées les mémoires Mₒ, respectivement M₁, en explicitant les processeurs virtuels Pₒ,...,Pᵢ,..., Pₙ₋₁ réalisés par l'unité de traitement UPₒ, les groupes de 6xn processeurs qui se forment à chaque noeud (n étant le nombre des processeurs virtuels qu' une unité de traitement réalise) et les n voies de communication avec les noeuds voisins où les mémoires sont disposées, notées M dans la figure, constituées par n processeurs virtuels, n'importe quel processeur pouvant effectuer des opérations de traitement ou de transfert en tenant compte des sollicitations courrantes sur n'importe laquelle des deux mémoires dont il est connecté.

Les instructions peuvent être dans le cadre du même programme des deux mémoires, le passage d'une séquence à l'autre en s'effectuant par une instruction de saut. Le processus de communication entre deux processeurs d'un groupe des processeurs, formé autour d'un noyau, se développe par l'intermède de la mémoire partagée disposée dans ce noeud (communication type mémoire partagée). Le processus de communication entre n'importe quel deux processeurs des groupes différents du réseau se développe ainsi: le processeur émetteur dépose le message, formé conformément à un protocol de communication interprocesseur, dans la mémoire d'où il est transmis à travers le réseau conformément au principe "mémorise et transmet". Pour se dérouler, ce processus est initié par le processeur sur lequel roule le processus émetteur qui active un bloc de contrôle interprocesseur qui compose chaque unité de mémoires de chaque noeud. La commande, l'adresse- processeurs, le type de l'instruction, etc. se transmettent sur les bus d'accès à l'une de deux unités de mémoire à laquelle est connecté l'unité de traitement, conformément à la routine de communication choisie. Tout à coup, le bloc de contrôle interprocessus activé, celui-ci émet une instruction de commande d'arrêt et de communication processus, vers le processeur virtuel dont il a réceptioné antérieurement l'adresse. Le processus virtuel visé par cette commande exécute une commutation de processus sur la procédure de communication, en faisant dans cette procedure le transfert sollicité entre les deux mémoires auxquelles il est connecté. Après l'exécution du transfert on choisit, conformément à un algorithme, l'adresse du processeur virtuel qui continuera le processus de communications et on émet sur le bus d'acces à l'unité de mémoire où on a déposé le message adresse du processeur virtuel sélectioné et la commande d'activation du bloc de contrôle intérprocesseurs attaché à cette mémoire. A la fin de l'exécution de la procédure de communication on exécute la commutation sur le processus interrompu. Par la suite le procédé se répète jusqu'à ce que le destinataire reçoit le message.

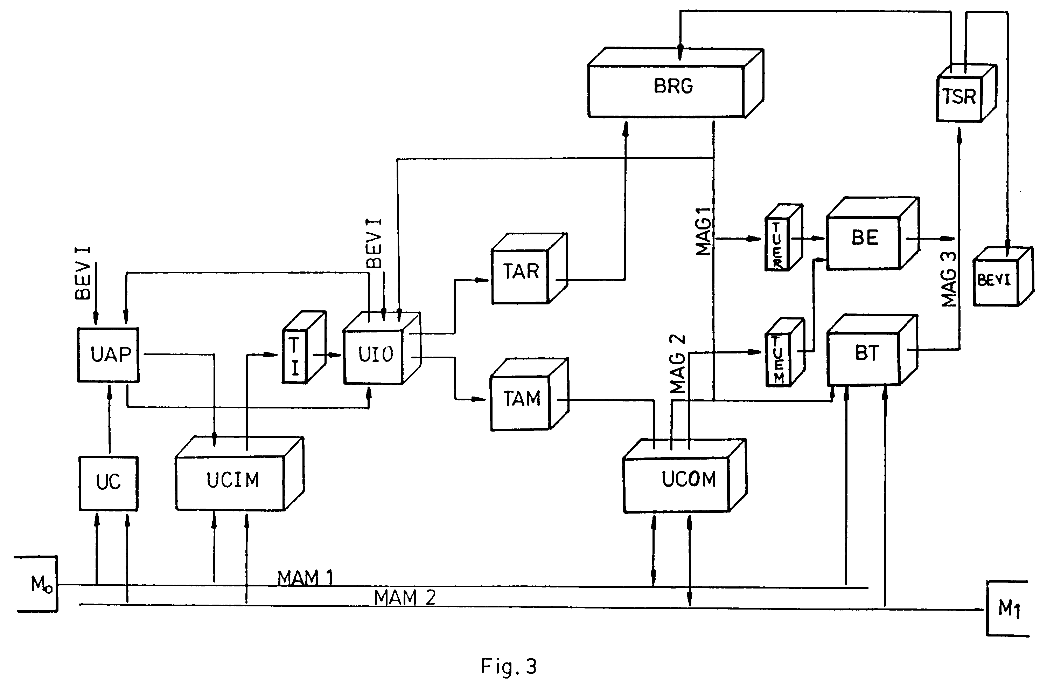

L'unité de traitement, conformément à l'invention (figure 3^{e}) contient une unité d'activation, UAP, qui utilise une file d'adresse programme et le contrôle afférent pour le calcul de l'adresse courante, l'exécution des branchements, des changements d'état programme en tenant compte de l'état des indicateurs de fonctionnement et des indications d'un bloc d'évidence, BEVI. L'unité accomplit aussi le rôle de mécanisme de mélange des programmes de traitement pour le balayage succesif de la pile d'adresses programme et l'emission dans le traitement par d'une ou par des deux instructions (en tenant compte de l'état courant du processus respectif) de chaque programme, dans des cycles de tact succesifs. Une unité de lecture des instructions des mémoires, UCIM, prend les demandes de l'UAP et commence la démarche de lecture des instructions de la mémoire au cas que celles-ci ne se retrouvent pas dans l'antémémoire avec lesquelles cette unité est dotée. Un bloc tampon d'instructions, TI, reçoit les instructions lues par UCIM. Un bloc d'interprétation ordre, UIO prend les instructions des tampons TI, les interprète, calcule les adresses des opérands et les dépose avec le type de l'opération, l'adresse de l'unité d'exécution et d'autres indicateurs qui spécifient la manière du développement de l'opération dans des tampons pour les opérands résidants dans des registres, TAR, respectivement dans des tampons pour les opérands résidants dans la mémoire, TAM, sauf dans le cas des instructions de saut quand l'adresse de saut est transmise à UAP, qui exécutera l'opération de saut. Un bloc de régistres généraux, BRG, contient les régistres généraux, en étant prévu avec deux portes d'accès indépendentes, de lecture du côte des tampons TAR le d'écriture du côté des tampons d'écriture dans les régistres, TSR, les portes étant controlées par un mécanisme d'accès avec priorité, les opérands lus étant emis par un bus de données MAG1 et résidants dans des tampons d'opérands TUER. Une unité de lecture d'opérands de la mémoire, UCOM, prend les demandes d'accès résidants dans TAM et si l'information ne réside pas dans l'antémémoire, dont cette unité est dotée, commence les démarches d'accès de la mémoire, les opérands lis étant émis sur un bus de données MAG2 et déposés dans un tampon d'opérands TUEM. Un bloc d'exécution, BE, qui contient des unites d'exécution spécialisées sur des types d'opérations de chaque type étant installé un nombre correspondants, de sorte qu'il assure le débit de traitement nécessaire, prend les opérands, le type de l'opération et les indicateurs qui spécifient la manière du développement de l'opération des tampons TUER et TUEM, effectuent l'opération et émettant le résultat sur le bus de données MAG3 qu'il dépose dans les tampons d'écriture dans les régistres généraux TSR. Ceux-ci, en parallèle avec la déposition des résultats dans le bloc des régistres généraux BRG, mettent à jour des indicateurs de fonctionnement global résident dans le bloc d'évidence BEVI, qui font partie d'un système de contrôle pour la structure entière disséminé dans celle-ci au niveau des unités, des tampons, des bus et réalisé par des indicateurs adresses, des étiquettes qui s'attachent aux instructions et aux opérands qui circulent dans les unités. Un bloc de transfert, BT, exécute le transfert d'information entre les deux unités de mémoire Mₒ et M₁, auquel est connectée l'unité, par l'intermède des deux bus d'accès MAM1, MAM2; les commandes de transfert sont captées par la même filière ainsi que les commandes courentes reçues par le BE, les adresses de transfert, la quantité des informations à transférer étant indiquée par le contenu des registres géneraux; après que le transfert de ces indicateurs a été effectué ceux-ci sont déposés, après la mise à jour, dans BRG. Une unité de contrôle, UC, prend du bus d'accès MAM1 ou MAM2 les ordes de contrôle nécessaires pour commencer, arrêter et tester les processus qui se déroulent dans l'unité.

L'unité de traitement assemble plusieurs types de parallélisme: le traitement parallèle d'un nombre suffisament grand de programmes, d'un programme étant après traité en parallèle plusieurs instructions, tant par la méthode du pipeline qu'aussi par l'exécution effective des plusieurs opérations simultanément. Le nombre de programmes dépend du jeu des instructions, les caractéristiques des instructions (le type d'adresaage, la complexité, etc.) d'algorithmes utilisés dans l'exécution, de la technologie utilisée, par des performances désirées, par les propriétés statistiques des phénomènes de l'unité de traitement, etc. Les instructions des programmes à traiter sont mêlées par le balayage succesif des programmes, en émettant dans le traitement l'une ou deux instructions de chaque programme dans des cycles de tact en tenant compte de l'état du processus, en obtenant ainsi un flux sans interrelations entre les instructions succesives qui appartiennent à des programmes différents, ce qui est idéal, du point de vue du traitement dans une structure pipeline, flux qui détermine un régime stationaire à cause du grand nombre des programmes en travail, en permettant un traitement statistique des phénomènes et les ressources installées dimmensionnées d'une manière optimale. Les programmes exploitent en commun la quantité des ressources physiques installées, des ressources qui ne sont pas affectées à l'un ou à l'autre d'entre les processus que temporellement, conformément aux nécessitées du moment, en assurant ainsi une virtualisation des ressources et de chaque programme un processeur virtuel avec de la communications entre elles par la mémoire, connexion type mémoire partagée et la possibilité d'accéder à deux mémoires sur lesquelles roulent les opérations de traitement ou de transfert entre les deux mémoires.

### Possibilité d'application Industrielle

Le but de l'invention est de réaliser un réseau de traitement parallèle des programmes en vue de la construction des systèmes de traitement massif parallèle, avec des performances élevées indifférement du domaine de l'application, avec utilisation efficace des ressources, en solutionnant les aspects concernant la communication dans le réseau et on facilite en même temps une distribution plus facile et une coordination des tâches de traitement.

## Revendications

1. Réseau pour le traitement parallèle des programmes de calcul, caracterisé par l'utilisation dans les noeuds du réseau d'unités de mémoires de grandes dimensions capables à permettre l'accès simultané des données de plusieurs unités de traitement montées sur les arêtes du réseau qui ont incidence dans ce noeud, les unités de traitement assurant un grand nombre des processeurs virtuels qui peuvent exécuter autant d'opérations de traitement sur les deux mémoires entre lesquelles est connectée l'unité de traitement, que d'opérations de transfert entre les deux mémoires entre lesquelles est connectée l'unité de traitement; les unités de mémoire étant prévues, en vue de la réalisation du processus de communication en réseau, chacunes avec un bloc de contrôle intérprocessus qui participe audit processus.

2. Réseau, conformément à la revendication 1^{e}, caracterisé en ce que l'unité de traitement parallèle est composée d'une unité d'activation (UAP) qui contient la pile d'adresses programme et le contrôle nécessaire pour calculer l'adresse de l'instruction courante, l'exécution des branchements, le changement d'état programme, d'une unité de lecture des instructions de mémoire (UCIM) qui prend les demandes de l'unité d'activation et extrait les instructions de la mémoire ou de l'antémémoire dont elle est dotée et les dépose dans des tampons d'instructions (TI), d'un bloc d'interpretation ordre (BIO) qui prend les instructions des tampons d'instructions, les interprète, calcule les adresses des opérands et les dépose dans les tampons d'accès aux régistres (TAR) ou des tampons d'accès à la mémoire (TAM) de l'entrée d'un bloc de registres généraux (BRG) respectivement dans un bloc de lecture opérands de la mémoire (UCOM) doté avec des antémémoires pour les opérands, des blocs qui, après la lecture des opérands, ils déposent ceux-ci avec les indicateurs qui accompagnent l'adresse dans les tampons pour les opérands reçue de régistres ou de mémoire (TUER, respectivement TUEM) résidants à l'entrée d'un bloc d'exécution (BE) composé par des sets des unités d'exécution spécialisées sur des opérations, de chaque type d'unité en installant un nombre correspondant pour assurer le débit de traitement, ces unités en prenant les opérands des tampons de l'entrée exécutent l'opération sollicitée et déposent le résultat dans des tampons d'écriture dans les régistres généraux (TSR), tampons qui déposent le résultat dans le bloc des régistres généraux, mais en parallèle ils mettent à jour des indicateurs d'évidence sur les instructions dans le traitement résidants dans un bloc d'évidence (BEVI), d'un bloc de transfert (BT) composé par des unités qui exécutent le transfert d'information entre les deux unités de mémoire auxquelles est connectée l'unité de traitement et d'une unité de contrôle (UC) qui prend des bus de connexion avec les mémoires les ordres de contrôle nécessaires à lancer, arrêter et tester les processus qui se développent dans l'unité, processus qui ont assuré un processeur virtuel réalisé par la virtualisation des ressources physiques installées qu'ils utilisent en commun.

## Patentansprüche

1. Netzwerk für die Parallelverarbeitung von Rechenprogrammen, gekennzeichnet durch die Benutzung - in den Netzwerkknoten - von Großraumspeichereinheiten, fähig den simultanen Zugriff bzw. Zugang der Daten von mehreren Verarbeitungseinheiten zu ermöglichen, eingeschaltet in die Netzwerkkanten, die rückwirken in diese Knoten, wobei die Verarbeitungseinheiten eine große Anzahl virtueller Prozessoren gewährleisten, die ebensoviele Verarbeitungsoperationen in den beiden Speichern ausführen können, zwischen die die Verarbeitungseinheit eingeschaltet ist, wie Transferoperationen zwischen zwei Speichern, zwischen die die Verarbeitungseinheit eingeschaltet ist; wobei jede der Speichereinheiten hinsichtlich der Durchführung des Netzwerk-Kommunikationsprozesses mit einem Interprozeß-Steuerblock versehen ist, der an besagtem Prozeß teilnimmt.

2. Netz nach Anspruch 1, dadurch gekennzeichnet, daß die Parallelverarbeitungseinheit gebildet wird
durch eine Aktivierungseinheit (UAP), die den Programmadressenstapel und die nötige Steuerung enthält, um die Adresse des laufenden Befehls, die Ausführung der Verzweigungen bzw. Sprünge, den Programmstatuswechsel zu berechnen,
durch eine Speicherbefehl-Leseeinheit (UCIM), welche die Anfragen der Aktivierungseinheit entgegennimmt und die Befehle aus dem Speicher oder dem Cache-Speicher, mit dem sie versehen ist, ausliest und in Befehlspuffer (TI) einspeichert,
durch einen Befehlsinterpretierungsblock (BIO), der die Befehle der Befehlspuffer entgegennimmt, sie interpretiert, die Adressen der Operanden berechnet und sie abspeichert in den Registerzugriff-Puffern (TAR) oder Speicherzugriff-Puffern (TAM) des Eingangs eines Hauptregisterblocks (BRG) beziehungsweise in einem Operandenleseblock des Speichers (UCOM), versehen mit Cache-Speichern für die Operanden,
durch Blöcke die, nach dem Lesen der Operanden, diese abspeichern mit den Indikatoren bzw. Kennzeichnungen, die die Adresse in den Puffern für die Operanden begleiten, empfangen von Registern oder Speicher (TUER beziehungsweise TUEM), angeordnet am Eingang eines Ausführungsblocks (BE), gebildet durch Gruppen von auf Operationen spezialisierten Ausführungseinheiten, wobei von jedem Einheitentyp eine entsprechende Anzahl installiert ist, um den Datendurchsatz zu gewährleisten, diese Einheiten die Operanden den Eingangspuffern entnehmen, die geforderten Operationen ausführen und das Resultatt in Schreibpuffern in den Hauptregistern (TSR) abspeichern, wobei diese Puffer das Resultat in dem Hauptregisterblock abspeichern, aber parallel bei der in einer Evidenz-Einheit (BEVI) stattfindenden Bearbeitung die Evidenz-Kennzeichnungen der Befehle aktualisieren,
durch einen Transferblock (BT), gebildet durch Einheiten, die den Informationstransfer zwischen den beiden Speichereinheiten durchführen, mit denen die Verarbeitungsheit verbunden ist, und durch eine Steuereinheit (UC), die den Verbindungsbussen mit den Speichern die nötigen Steuerbefehle entnimmt, um die in der Einheit ablaufenden Prozesse zu starten, anzuhalten und zu testen, wobei diese Prozesse einen virtuellen Prozessor gewährleisten, realisiert durch die Virtualisierung der von ihnen gemeinsam genutzten physischen Ressourcen.

## Claims

1. Network for the parallel processing of computing programs, characterized by the use, in the nodes of the network, of units with large-dimension memories capable of allowing simultaneous access of the data of a plurality of processing units mounted on the edges of the network which affect this node, the processing units providing a large number of virtual processors which can execute as many processing operations, on the two memories between which the processing unit is connected, as transfer operations between the two memories between which the processing unit is connected; the memory units being each provided, with a view to fulfilling the network communication process, with an interprocess control block which participates in the said process.

2. Network according to Claim 1, characterized in that the parallel processing unit is composed of an activation unit (UAP) which contains the program address stack and the control necessary for calculating the address of the current instruction, the execution of branching operations and the changing of program state, of a unit for reading instructions in memory (UCIM) which takes the requests from the activation unit and extracts the instructions from the memory or from the cache memory with which it is provided, and deposits them in instruction buffers (TI), of a command interpretation block (BIO) which takes the instructions from the instruction buffers, interprets them, calculates the addresses of the operands and deposits them in the register access buffers (TAR) or memory access buffers (TAM) of the input of a general register block (BRG) or, respectively, in a block for reading operands in memory (UCOM), which is provided with cache memories for the operands, which blocks, after reading the operands, deposit them with the indicators which accompany the address in the buffers for the operands received from registers or memory (TUER and TUEM, respectively) which are resident at the input of an execution block (BE) composed of sets of execution units specialized for operations of each type of unit by installing a corresponding number for providing the processing rate, these units, by taking the operands from the input buffers, execute the required operation and deposit the result in write buffers in the general registers (TSR), which buffers deposit the result in the general register block, but in parallel they update the evidence indicators on the instructions in the processing which are resident in an evidence block (BEVI), of a transfer block (BT) composed of units which execute the data transfer between the two memory units to which the processing unit is connected and of a control unit (UC) which takes, from the buses for connecting to the memories, the control commands necessary to start, stop and test the processes which proceed in the unit, which processes are fulfilled by a virtual processor produced by virtualizing the installed physical resources which they use in common.
